# EUROPÄISCHE PATENTANMELDUNG

(11) **EP 2 816 507 A1**
(43) Veröffentlichungstag der Anmeldung: **24.12.2014**
(21) Anmeldenummer: 13173162.2
(22) Anmeldetag: 21.06.2013
(51) Int. Cl.: G06K 13/08

(54) **Kartenleser mit zwei ineinander drehbar gelagerten Trommeln**

(71) Anmelder: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus

(57) **Zusammenfassung**

Bei einem Kartenleser (1) mit einem Magnetkopf (17) und/oder mit einer absenkbaren Kontaktiereinheit (19) zum Datenaustausch mit einer in den Kartenleser (1) eingeführten Chip- und/oder Magnetstreifenkarten (23) ist erfindungsgemäß vorgesehen, dass der Magnetkopf (17) längsverschiebbar und/oder die Kontaktiereinheit (19) absenkbar in einer Innentrommel (8) geführt sind, welche in einer Außentrommel (2) drehbar gelagert ist, dass ein Drehantrieb (9) zum Verdrehen der Innentrommel (8) gegenüber der Außentrommel (2) vorgesehen ist, dass die Innentrommel (8) einen parallel zur Trommelachse verlaufenden Karteneinführschlitz (12) und die Außentrommel (2) einen parallel zur Trommelachse verlaufenden Karteneinführschlitz (5), eine in der Trommelinnenseite verlaufende wendelförmige Kulissenführung (6) und/oder eine in der Trommelinnenseite verlaufende abgewinkelte Kulissenführung (7) mit einem auf gleicher axialer Höhe verlaufenden geraden Kulissenabschnitt (7a) und einem schrägen Kulissenabschnitt (7b) aufweisen, und dass der Magnetkopf (17) in der wendelförmigen Kulissenführung (6) und/oder die Kontaktiereinheit (19) in der abgewinkelten Kulissenführung (7) der Außentrommel (2) geführt sind.

## Beschreibung

Die vorliegende Erfindung betrifft einen Kartenleser mit einem Magnetkopf und/oder mit einer absenkbaren Kontaktiereinheit zum Datenaustausch mit einer in den Kartenleser eingeführten Chip- und/oder Magnetstreifenkarten.

Bei bekannten Kartenlesern dieser Art wird die Karte mit ihrer kürzeren Kante voran, also längs, in den Kartenleser eingeführt. Dabei ist ein hoher konstruktiver Aufwand erforderlich, um den Kartenleser möglichst manipulationssicher auszubilden. Beispielsweise wird die Karteneinführöffnung, nachdem die Karte in den Kartenleser eingezogen ist, mit einer Klappe verschlossen, um Manipulationen mittels an der Karte angebrachter Drähte zu verhindern. Auch wird die Kontakteinheit des Kartenlesers durch eine Bohrschutzhaube abgedeckt, die eine flächendeckende, innere Bohrschutz-Leiterbahnstruktur aufweist, um Manipulationen an der Kontakteinheit zu verhindern.

Es ist demgegenüber die Aufgabe der vorliegenden Erfindung, einen verbesserten, kostengünstigen, aber dennoch manipulationsgeschützten Kartenleser bereitzustellen.

Diese Aufgabe wird erfindungsgemäß durch einen Kartenleser mit den Merkmalen von Anspruch 1 gelöst.

Erfindungsgemäß wird die Karte durch die miteinander fluchtenden Einführschlitze der Außen- und Innentrommeln vollständig in die Innentrommel eingezogen. Durch Verdrehen der Innentrommel gegenüber der Außentrommel wird einerseits die Einführöffnung geschlossen und andererseits sowohl der Magnetkopf in der Innentrommel in Axial- bzw. Längsrichtung entlang des Magnetstreifens der Karte verschoben als auch die Kontaktiereinheit auf die Kontaktfelder der Karte abgesenkt. Die Karte befindet sich also während der Datenaustausches vollständig in der Innentrommel und vor einem Manipulationszugriff geschützt. So werden an der Karte befestigte Drähte entweder beim Verdrehen der Innentrommel abgeschert oder blockieren das Verdrehen der Innentrommel. Eine unbemerkte Manipulation am Kartenleser ist somit nicht möglich, wodurch ein "sicherer Kartenleser (secure card reader)" bereitgestellt ist.

Vorzugsweise ist die Innentrommel aus Metall und bis auf den Einführschlitz und diejenigen Aussparungen, welche für die Führung des Magnetkopfes und der Kontakteinheit in den Kulissenführungen erforderlich sind, in sich geschlossen. Die Außentrommel ist bevorzugt ein Kunststoffteil und kann eine flächendeckende, innere Bohrschutz-Leiterbahnstruktur aufweisen.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: zwei perspektivische Ansichten des erfindungsgemäßen Kartenlesers mit einer Außentrommel;
- Fig. 2: einen an den beiden Stirnenden des erfindungsgemäßen Kartenlesers vorgesehenen Antrieb zum Verdrehen einer Innentrommel gegenüber der Außentrommel;
- Fig. 3: die innere Schutztrommel mit Karteneinführ- und Führungsschlitzen;
- Fign. 4a, 4b: einen in der inneren Schutztrommel axial verschiebbar geführten Magnetkopf (Fig. 4a) und eine in der inneren Schutztrommel absenkbar geführte Kontakteinheit (Fig. 4b);
- Fign. 5a-5c: den erfindungsgemäßen Kartenleser in seiner Karteneinführposition in einer Draufsicht (Fig. 4a), in einer Längsschnittansicht mit nicht dargestellter Innentrommel (Fig. 4b) und in einer Querschnittansicht (Fig. 4c);
- Fign. 6a, 6b: den erfindungsgemäßen Kartenleser mit der aus der Karteneinführposition um 10° (Fig. 6a) und um 270° (Fig. 6b) gegenüber der Außentrommel verdrehten Innentrommel, jeweils in einer Draufsicht analog zu Fig. 5a; und
- Fign. 7a, 7b: den erfindungsgemäßen Kartenleser mit der aus der Karteneinführposition um 270° gegenüber der Außentrommel verdrehten Innentrommel, jeweils in Längs- und Querschnittansichten analog zu Fign. 5b und 5c.

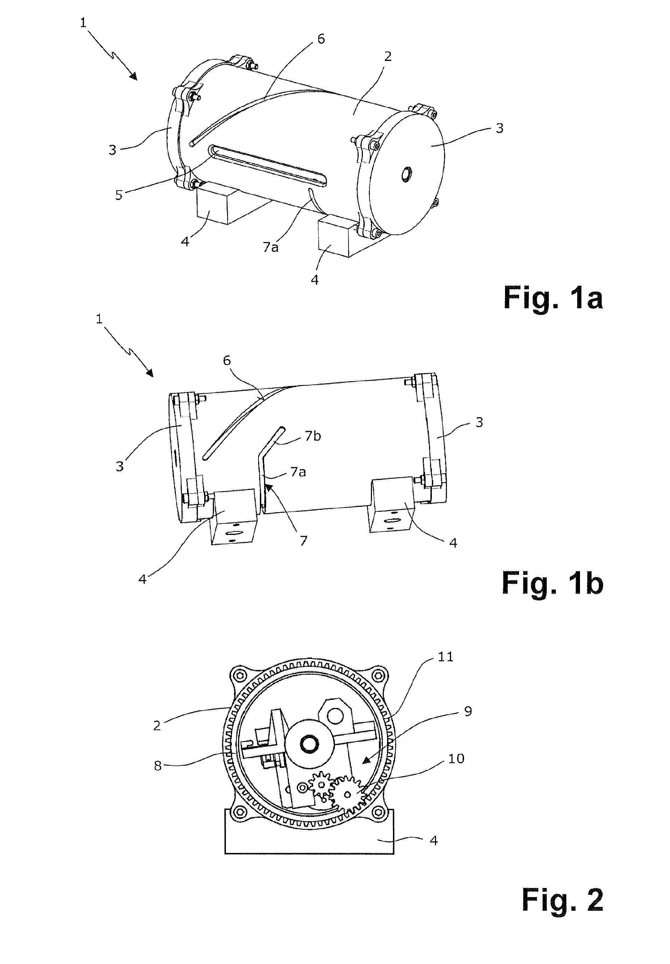

Der in **Fign. 1a, 1b** gezeigte Kartenleser **1** umfasst eine Außentrommel **2** (z.B. aus Kunststoff), die an ihren beiden Enden jeweils mit einem Deckel **3** verschlossen ist und über zwei Befestigungsfüße **4** ortsfest montiert wird. Die Außentrommel 2 weist einen parallel zur Trommelachse verlaufenden Karteneinführschlitz **5** sowie zwei nur in der Trommelinnenseite verlaufende Kulissenführungen **6, 7** auf. Die eine Kulissenführung 6 verläuft wendelförmig vom einen zum anderen Trommelende und deckt dabei einen Winkelbereich von ca. 270° ab. Die andere Kulissenführung 7 umfasst einen geraden Kulissenabschnitt **7a,** der auf gleicher axialer Höhe verläuft und dabei einen Winkelbereich von ca. 240° abdeckt, und einen schrägen Kulissenabschnitt **7b,** der vom geraden Kulissenabschnitt 7a abgeht und einen Winkelbereich von ca. 30° abdeckt.

Wie in **Fig. 2** gezeigt, ist in der Außentrommel 2 eine Innentrommel **8** (z.B. aus Metall) mit minimalem Spiel angeordnet, die dadurch in der Außentrommel 2 um die Trommelachse drehbar gelagert ist. Im Inneren der Innentrommel 8 ist ein Drehantrieb **9** (z.B. Antriebsmotor) mit einem Antriebsritzel **10** befestigt, das mit einem Innenzahnkranz **11** an der Trommelinnenseite der Außentrommel 2 kämmt. Der Drehantrieb 9 kann einseitig in nur einem Deckel 3 oder beidseitig in beiden Deckeln 3 vorgesehen sein.

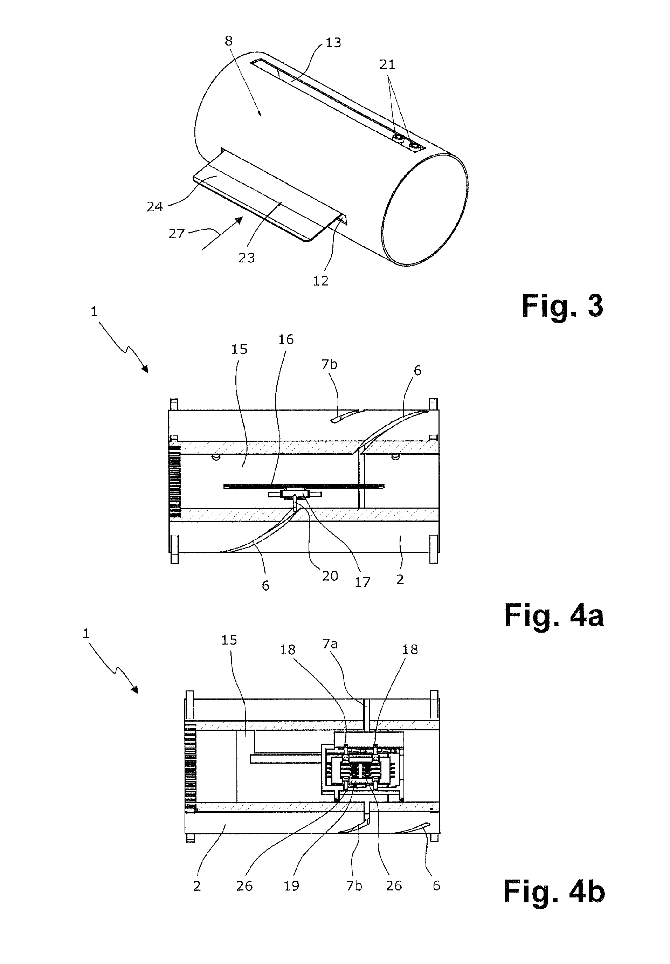

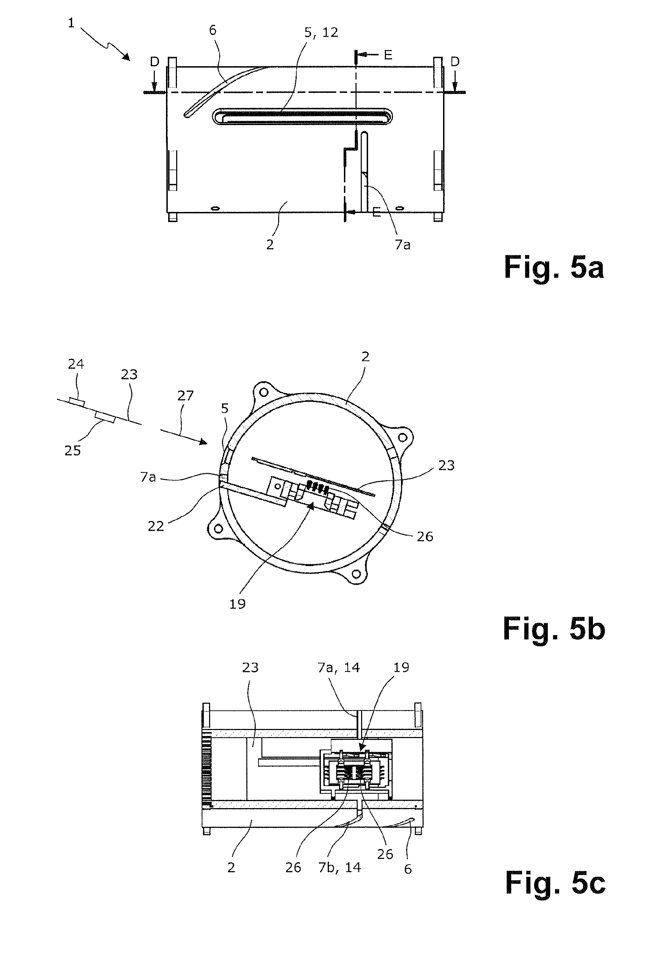

Wie in **Fig. 3** gezeigt, weist die Innentrommel 8 einen parallel zur Trommelachse verlaufenden Karteneinführschlitz **12,** einen parallel zur Trommelachse vom einen zum anderen Trommelende verlaufenden geraden (Führungs)Schlitz **13,** sowie einen der zweite Kulissenführung 7 entsprechenden abgewinkelten (Führungs)Schlitz **14** (Fig. 5b) auf.

Wie in **Fign. 4a, 4b** gezeigt, ist im Innern der Innentrommel 8 eine Trägerplatte **15** montiert, die eine parallel zur Trommelachse verlaufende Längsführung **16,** in welcher ein Magnetkopf **17** längsverschiebbar geführt ist, und Absenkführungen **18,** in denen eine Kontaktiereinheit **19** höhenverschiebbar geführt ist. Der Magnetkopf 17 greift mit einem Stift **20,** ggf. mithilfe von Kugellagern **21,** durch den geraden Führungsschlitz 13 der Innentrommel 8 hindurch in die wendelförmige Kulissenführung 6 der Außentrommel 2 ein. Die Kontaktiereinheit 19 greift mit einem Stift **22** (Fig. 5b) durch den abgewinkelten Führungsschlitz 14 der Innentrommel 8 hindurch in die abgewinkelte Kulissenführung 6 der Außentrommel 2 ein.

Der Kartenleser 1 dient zum Lesen von Chip-/Magnetstreifenkarten **23,** die auf ihrer einen Kartenseite einen in Kartenlängsrichtung verlaufenden Magnetstreifen **24** und/oder auf ihrer anderen Kartenseite einen Mikrochip (nicht gezeigt) aufweisen, dessen Kontakte als elektrische Kontaktfelder **25** auf der Kartenoberfläche vorgesehen sind (Fig. 5b). Die absenkbare Kontaktiereinheit 19 weist in bekannter Weise eine Doppelreihe mit je vier Federkontakten **26** (Fig. 5b) zum Kontaktieren der elektrischen Kontaktfelder der Chipkarte 23 auf.

In der in **Fign. 5a-5c** gezeigten Karteneinführposition des Kartenlesers 1 fluchten die Karteneinführschlitze 5, 12 der Außen- und Innentrommel 2, 8 miteinander und bilden eine gemeinsame Karteneinführöffnung aus, durch die die Karte 23 mit ihrer längeren Kante voran, also quer, vom Benutzer in den Kartenleser 1 in Einführrichtung **27** eingeführt wird. Der Magnetstreifen 24 befindet sich dabei, gesehen in Einführrichtung 27, hinten auf der Kartenoberseite und verläuft parallel zu den Karteneinführschlitzen 5, 12. Die Karte 23 wird dann in seitlichen Führungen über einen nicht näher gezeigten Transportantrieb weiter in Einführrichtung 26 in das Innere der Innentrommel 8 bis in ihre Datenaustauschposition eingezogen, was durch einen hier nicht gezeigten Endlagenschalter detektiert wird. Die Kontaktiereinheit 19 befindet sich dabei in ihrer angehobenen Position, in der ihre Federkontakte 26 nicht in die Kartenbahn eingreifen und somit das Einführen der Karte 23 nicht behindern.

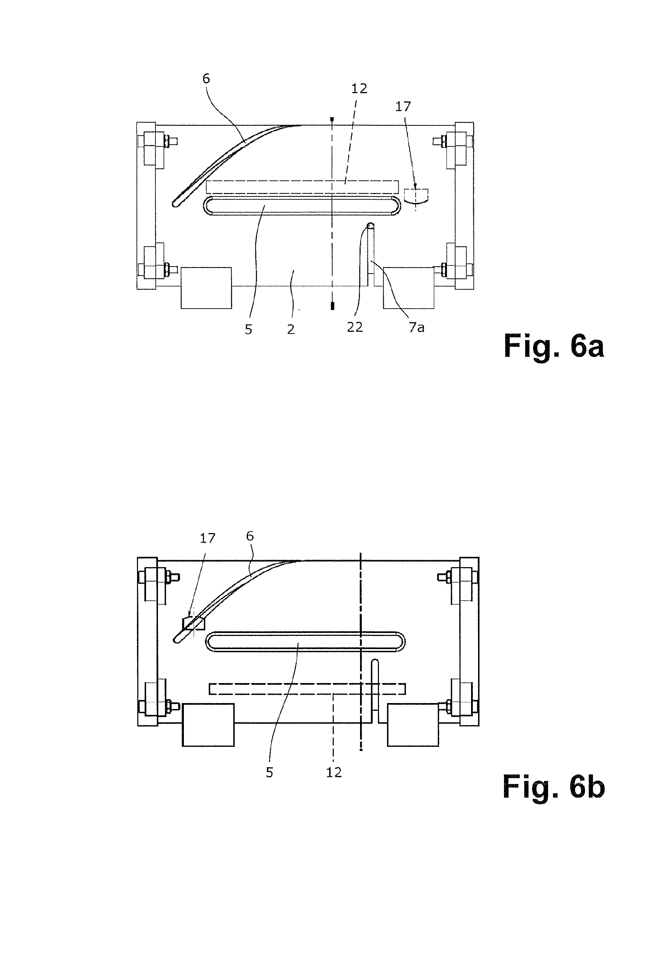

Dann wird die Innentrommel 8, angetrieben vom Drehantrieb 9, gegenüber der Außentrommel 2 um 270° verdreht. Wie in **Fig. 6a** gezeigt, fluchten ab einer 10°-Verdrehung der Innentrommel 8 der Außentrommel 2 die Karteneinführschlitze 5, 12 der Außen- und Innentrommel 2, 8 nicht mehr miteinander, d.h., die Karteneinführöffnung ist auf dem Drehwinkelbereich von 10° bis 270° durch die Innentrommel 8 verschlossen. In der in Fig. 6a gezeigten 10°-Drehstellung der Innentrommel 8 befindet sich der Magnetkopf 17 in seiner rechten Anfangsposition. Da der Magnetkopf 17 sowohl in der Innentrommel 8 längsverschiebbar als auch mit seinem Stift 20 in der wendelförmigen Kulissenführung 6 der Außentrommel 2 geführt ist, führt die Drehung der Innentrommel 8 um 270° zu einer Längsverschiebung des Magnetkopfes 17 innerhalb der Innentrommel 8 von seiner in Fig. 6a gezeigten rechten Anfangsposition in die in **Fig. 6b** gezeigte linke Endposition, und zwar entlang des Magnetstreifens 24 der Karte 23, die sich innerhalb der Innenhülse 8 in ihrer Datenaustauschposition befindet. Dabei kann der Magnetkopf 17 die auf dem Magnetstreifen 24 gespeicherten Daten auslesen bzw. bearbeiten. Während der 270°-Drehung ist der Stift 20 in dem geraden Führungsschlitz 13 der Innentrommel 8 zusätzlich über die Kugellager 21 leicht verschiebbar und kippsicher geführt.

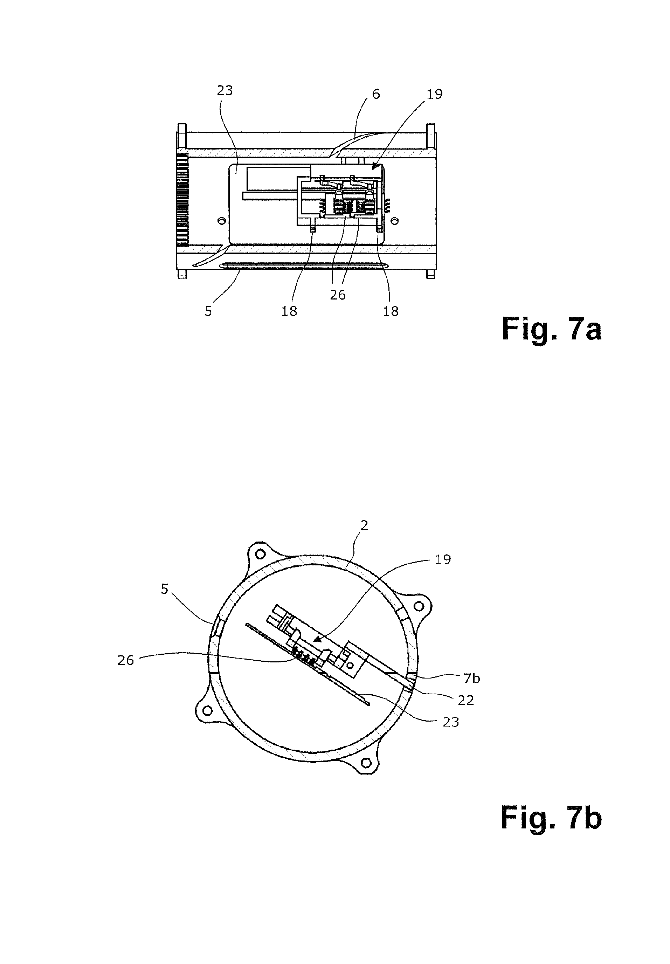

Die Kontaktiereinheit 19 ist sowohl in der Innentrommel 8 absenkbar als auch mit ihrem Stift 22 in der abgewinkelten Kulissenführung 7 der Außentrommel 2 geführt. Im Drehwinkelbereich von 0° (Karteneinführposition) bis ca. 240° ist der Stift 22 in dem geraden Kulissenabschnitt 7a geführt, so dass keine Längsverschiebung der Kontaktiereinheit 19 relativ zur Innentrommel 8 stattfindet. Erst wenn ab einem Drehwinkel von 240° der Stift 22 in dem schrägen Kulissenabschnitt 7b geführt ist, bewirkt die Drehung der Innentrommel 8 im Drehwinkelbereich von 240° bis 270° eine Längsverschiebung der Kontaktiereinheit 19 relativ zu der Innentrommel 8. Über die Absenkführungen 18 wird dadurch die Kontaktiereinheit 19 mit ihren Federkontakten 26 auf die Kontaktfelder 25 der Karte 23 abgesenkt, um so den Datenaustausch mit dem Mikrochip der Karte 23 zu ermöglichen **(****Fign. 7a, 7b****).**

Abschließend wird die Innentrommel 8 wieder zurück in die 0°-Drehstellung gedreht, wodurch die Kontaktiereinheit 19 zurück in ihre angehobene Position und der Magnetkopf 17 zurück in seine rechte Anfangsposition bewegt werden. In der 0°-Drehstellung fluchten die Karteneinführschlitze 5, 12 der Außen- und Innentrommel 2, 8 miteinander, um die gemeinsame Karteneinführöffnung ist wieder geöffnet. Die Karte 23 wird über den Transportantrieb nun entgegen der Einführrichtung 26 vom Inneren der Innentrommel 8 durch die Karteneinführöffnung herausgeführt, wo sie vom Benutzer entnommen werden kann.

## Patentansprüche

1. Kartenleser (1) mit einem Magnetkopf (17) und/oder mit einer absenkbaren Kontaktiereinheit (19) zum Datenaustausch mit einer in den Kartenleser (1) eingeführten Chip- und/oder Magnetstreifenkarten (23),
**dadurch gekennzeichnet,**
**dass** der Magnetkopf (17) längsverschiebbar und/oder die Kontaktiereinheit (19) absenkbar in einer Innentrommel (8) geführt sind, welche in einer Außentrommel (2) drehbar gelagert ist,
**dass** ein Drehantrieb (9) zum Verdrehen der Innentrommel (8) gegenüber der Außentrommel (2) vorgesehen ist,
**dass** die Innentrommel (8) einen parallel zur Trommelachse verlaufenden Karteneinführschlitz (12) und die Außentrommel (2) einen parallel zur Trommelachse verlaufenden Karteneinführschlitz (5), eine in der Trommelinnenseite verlaufende wendelförmige Kulissenführung (6) und/oder eine in der Trommelinnenseite verlaufende abgewinkelte Kulissenführung (7) mit einem auf gleicher axialer Höhe verlaufenden geraden Kulissenabschnitt (7a) und einem schrägen Kulissenabschnitt (7b) aufweisen, und
**dass** der Magnetkopf (17) in der wendelförmigen Kulissenführung (6) und/oder die Kontaktiereinheit (19) in der abgewinkelten Kulissenführung (7) der Außentrommel (2) geführt sind.

2. Kartenleser nach Anspruch 1, **dadurch gekennzeichnet, dass** sich die wendelförmige Kulissenführung (6) und die abgewinkelte Kulissenführung (7) über einen Winkelbereich von ca. 270° erstreckt.

3. Kartenleser nach Anspruch 1 oder 2, **dadurch gekennzeichnet, dass** sich der gerade Kulissenabschnitt (7a) der abgewinkelten Kulissenführung (7) über einen Winkelbereich von ca. 240° erstreckt.

4. Kartenleser nach einem der vorhergehenden Ansprüche, **dadurch gekennzeichnet, dass** sich der schräge Kulissenabschnitt (7b) der abgewinkelten Kulissenführung (7) über einen Winkelbereich von ca. 30° erstreckt.

5. Kartenleser nach einem der vorhergehenden Ansprüche, **dadurch gekennzeichnet, dass** der Magnetkopf (17) mit einem Stift (20) in der wendelförmige Kulissenführung (6) geführt ist.

6. Kartenleser nach einem der vorhergehenden Ansprüche, **dadurch gekennzeichnet, dass** die Kontaktiereinheit (19) mit einem Stift (22) in der abgewinkelte Kulissenführung (7) geführt ist.

7. Kartenleser nach einem der vorhergehenden Ansprüche, **dadurch gekennzeichnet, dass** sich die wendelförmige Kulissenführung (6) vom einen zum anderen Trommelende erstreckt.

8. Kartenleser nach einem der vorhergehenden Ansprüche, **dadurch gekennzeichnet, dass** der Drehantrieb (9) an der Innentrommel (8) vorgesehen ist und ein Antriebsritzel (10) aufweist, das mit einem Innenzahnkranz (11) der Außentrommel (2) kämmt.

9. Kartenleser nach einem der vorhergehenden Ansprüche, **dadurch gekennzeichnet, dass** bei miteinander fluchtenden Karteneinführschlitzen (5, 12) der Außen- und Innentrommeln (2) die Chip- und/oder Magnetstreifenkarte (23) mit ihrer längeren Kante voran in den Kartenleser (1) einführbar ist.

10. Kartenleser nach einem der vorhergehenden Ansprüche, **dadurch gekennzeichnet, dass** die Innentrommel (8) einen parallel zur Trommelachse verlaufenden geraden Schlitz (13), der vom Magnetkopf (17) bzw. von dessen Stift (20) durchgriffen ist, und einen der abgewinkelten Kulissenführung (7) der Außentrommel (2) entsprechenden abgewinkelten Schlitz (14), der von der Kotakteinheit (19) bzw. von deren Stift (22) durchgriffen ist, aufweist.

11. Kartenleser nach einem der vorhergehenden Ansprüche, **dadurch gekennzeichnet, dass** die Innentrommel (8) aus Metall ist.

## Geänderte Patentansprüche

### Geänderte Patentansprüche gemäss Regel 137(2) EPÜ.

**1.** Kartenleser (1) mit einem Magnetkopf (17) und mit einer absenkbaren Kontaktiereinheit (19) zum Datenaustausch mit einer in den Kartenleser (1) eingeführten Chip- und Magnetstreifenkarte (23),
**dadurch gekennzeichnet,**
**dass** der Magnetkopf (17) längsverschiebbar und die Kontaktiereinheit (19) absenkbar in einer Innentrommel (8) geführt sind, welche in einer Außentrommel (2) drehbar gelagert ist,
**dass** ein Drehantrieb (9) zum Verdrehen der Innentrommel (8) gegenüber der Außentrommel (2) vorgesehen ist,
**dass** die Innentrommel (8) einen parallel zur Trommelachse verlaufenden Karteneinführschlitz (12) und die Außentrommel (2) einen parallel zur Trommelachse verlaufenden Karteneinführschlitz (5), eine in der Trommelinnenseite verlaufende wendelförmige Kulissenführung (6) und eine in der Trommelinnenseite verlaufende abgewinkelte Kulissenführung (7) mit einem auf gleicher axialer Höhe verlaufenden geraden Kulissenabschnitt (7a) und einem schrägen Kulissenabschnitt (7b) aufweisen, und
**dass** der Magnetkopf (17) in der wendelförmigen Kulissenführung (6) und die Kontaktiereinheit (19) in der abgewinkelten Kulissenführung (7) der Außentrommel (2) geführt sind.

**2.** Kartenleser (1) mit einem Magnetkopf (17) zum Datenaustausch mit einer in den Kartenleser (1) eingeführten Magnetstreifenkarte (23),
**dadurch gekennzeichnet,**
**dass** der Magnetkopf (17) längsverschiebbar in einer Innentrommel (8) geführt ist, welche in einer Außentrommel (2) drehbar gelagert ist,
**dass** ein Drehantrieb (9) zum Verdrehen der Innentrommel (8) gegenüber der Außentrommel (2) vorgesehen ist,
**dass** die Innentrommel (8) einen parallel zur Trommelachse verlaufenden Karteneinführschlitz (12) und die Außentrommel (2) einen parallel zur Trommelachse verlaufenden Karteneinführschlitz (5) und eine in der Trommelinnenseite verlaufende wendelförmige Kulissenführung (6) aufweisen, und
**dass** der Magnetkopf (17) in der wendelförmigen Kulissenführung (6) geführt ist.

**3.** Kartenleser (1) mit einer absenkbaren Kontaktiereinheit (19) zum Datenaustausch mit einer in den Kartenleser (1) eingeführten Chipkarte (23), **dadurch gekennzeichnet,**
**dass** die Kontaktiereinheit (19) absenkbar in einer Innentrommel (8) geführt ist, welche in einer Außentrommel (2) drehbar gelagert ist,
**dass** ein Drehantrieb (9) zum Verdrehen der Innentrommel (8) gegenüber der Außentrommel (2) vorgesehen ist,
**dass** die Innentrommel (8) einen parallel zur Trommelachse verlaufenden Karteneinführschlitz (12) und die Außentrommel (2) einen parallel zur Trommelachse verlaufenden Karteneinführschlitz (5) und eine in der Trommelinnenseite verlaufende abgewinkelte Kulissenführung (7) mit einem auf gleicher axialer Höhe verlaufenden geraden Kulissenabschnitt (7a) und einem schrägen Kulissenabschnitt (7b) aufweisen, und
**dass** die Kontaktiereinheit (19) in der abgewinkelten Kulissenführung (7) der Außentrommel (2) geführt ist.

**4.** Kartenleser nach Anspruch 1 oder 2, **dadurch gekennzeichnet, dass** sich die wendelförmige Kulissenführung (6) über einen Winkelbereich von ca. 270° erstreckt.

**5.** Kartenleser nach einem der Ansprüche 1, 2 und 4, **dadurch gekennzeichnet, dass** der Magnetkopf (17) mit einem Stift (20) in der wendelförmigen Kulissenführung (6) geführt ist.

**6.** Kartenleser nach einem der Ansprüche 1, 2, 4 und 5, **dadurch gekennzeichnet, dass** sich die wendelförmige Kulissenführung (6) vom einen zum anderen Trommelende erstreckt.

**7.** Kartenleser nach Anspruch 1, 2, 4, 5 und 6, **dadurch gekennzeichnet, dass** die Innentrommel (8) einen parallel zur Trommelachse verlaufenden geraden Schlitz (13) aufweist, der vom Magnetkopf (17) bzw. von dessen Stift (20) durchgriffen ist.

**8.** Kartenleser nach Anspruch 1 oder 3, **dadurch gekennzeichnet, dass** sich die abgewinkelte Kulissenführung (7) über einen Winkelbereich von ca. 270° erstreckt.

**9.** Kartenleser nach einem der Ansprüche 1, 3 und 8, **dadurch gekennzeichnet, dass** sich der gerade Kulissenabschnitt (7a) der abgewinkelten Kulissenführung (7) über einen Winkelbereich von ca. 240° erstreckt.

**10.** Kartenleser nach einem der Ansprüche 1, 3, 8 und 9, **dadurch gekennzeichnet, dass** sich der schräge Kulissenabschnitt (7b) der abgewinkelten Kulissenführung (7) über einen Winkelbereich von ca. 30° erstreckt.

**11.** Kartenleser nach einem der Ansprüche 1, 3, 8, 9 und 10, **dadurch gekennzeichnet, dass** die Kontaktiereinheit (19) mit einem Stift (22) in der abgewinkelten Kulissenführung (7) geführt ist.

**12.** Kartenleser nach Anspruch 1, 3, 8, 9, 10 und 11, **dadurch gekennzeichnet, dass** die Innentrommel (8) einen der abgewinkelten Kulissenführung (7) der Außentrommel (2) entsprechenden abgewinkelten Schlitz (14) aufweist, der von der Kotakteinheit (19) bzw. von deren Stift (22) durchgriffen ist.

**13.** Kartenleser nach einem der vorhergehenden Ansprüche, **dadurch gekennzeichnet, dass** der Drehantrieb (9) an der Innentrommel (8) vorgesehen ist und ein Antriebsritzel (10) aufweist, das mit einem Innenzahnkranz (11) der Außentrommel (2) kämmt.

**14.** Kartenleser nach einem der vorhergehenden Ansprüche, **dadurch gekennzeichnet, dass** bei miteinander fluchtenden Karteneinführschlitzen (5, 12) der Außen- und Innentrommeln (2) die Chip- und/oder Magnetstreifenkarte (23) mit ihrer längeren Kante voran in den Kartenleser (1) einführbar ist.

**15.** Kartenleser nach einem der vorhergehenden Ansprüche, **dadurch gekennzeichnet, dass** die Innentrommel (8) aus Metall ist.
